# EUROPEAN PATENT APPLICATION

(11) **EP 4 093 139 A1**
(43) Date of publication of application: **23.11.2022**
(21) Application number: 20915137.2
(22) Date of filing: 20.01.2020
(51) Int. Cl.: H04W 74/08

(54) **COMMUNICATION METHOD AND APPARATUS**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN)
(74) Representative: Manitz Finsterwald Patent- und Rechtsanwaltspartnerschaft mbB
(86) International application number: PCT/CN2020/073335
(87) International publication number: WO 2021/146871

(57) **Abstract**

Embodiments of the present application provide a communication method and apparatus, the method including: determining, according to first bandwidth information corresponding to a first random access channel occasion RO, an initial uplink bandwidth part BWP. By determining the initial uplink BWP according to the first bandwidth information corresponding to the first RO, it is effectively ensured that the initial uplink BWP will not exceed a terminal bandwidth of the terminal device, thereby ensuring that the terminal device can perform normal uplink data transmission.

## Description

### TECHNICAL FIELD

The present application relates to communication technology, and in particular, to a communication method and apparatus.

### BACKGROUND

In new radio (New Radio, NR) of 5G, to reduce power consumption of a terminal, a network device will configure a bandwidth part (Bandwidth Part, BWP) for a terminal device, and the terminal can communicate with the network device through the BWP.

At present, during a process of random access, the terminal device usually receives a system broadcast message sent by the network device, and determines an initial uplink BWP according to the system broadcast message, so as to perform the uplink transmission in the process of random access in the initial uplink BWP, where a resource random access channel occasion (RACH Occasion, RO) is configured in the initial uplink BWP.

However, when there are a plurality of frequency division multiplexing ROs, a bandwidth corresponding to the plurality of ROs may be greater than a bandwidth of the terminal, and a bandwidth of the initial uplink BWP will be greater than the bandwidth of the terminal, which will cause that the terminal cannot perform normal uplink data transmission in the NR system.

### SUMMARY

Embodiments of the present application provide a communication method and apparatus, to avoid that a bandwidth of an initial uplink BWP is greater than a bandwidth of a terminal, which will cause that the terminal cannot normally perform transmission of uplink data in an NR system.

In a first aspect, an embodiment of the present application provides a communication method, including:
determining, according to first bandwidth information corresponding to a first random access channel occasion RO, an initial uplink bandwidth part BWP.

In a second aspect, an embodiment of the present application provides a communication method, including:
receiving a physical random access channel PRACH from a terminal device; and
determining, according to a first random access channel occasion RO corresponding to the PRACH, an initial uplink bandwidth part BWP corresponding to the terminal device, where the initial uplink BWP is determined according to first bandwidth information corresponding to the first RO.

In a third aspect, an embodiment of the present application provides a communication apparatus, including:
a determining module, configured to determine, according to first bandwidth information corresponding to a first random access channel occasion RO, an initial uplink bandwidth part BWP.

In a fourth aspect, an embodiment of the present application provides a communication apparatus, including:
a transceiving module, configured to receive a physical random access channel PRACH from a terminal device; and
a determining module, configured to determine, according to a first random access channel occasion RO corresponding to the PRACH, an initial uplink bandwidth part BWP corresponding to the terminal device, where the initial uplink BWP is determined according to first bandwidth information corresponding to the first RO.

In a fifth aspect, an embodiment of the present application provides a terminal device, including: a transceiver, a processor and a memory;
the memory stores a computer-executable instruction;
the processor executes the computer-executable instruction stored in the memory to cause the processor to execute the communication method according to any one of claims 1-19.

In a sixth aspect, an embodiment of the present application provides a network device, including: a transceiver, a processor and a memory;
the memory stores a computer-executable instruction;
the processor executes the computer-executable instruction stored in the memory to cause the processor to execute the communication method according to any one of claims 20-38.

In a seventh aspect, an embodiment of the present application provides a computer-readable storage medium, where the computer-readable storage medium stores a computer-executable instruction, and the computer-executable instruction is used to, when being executed by the processor, implement the communication method according to any one of claims 1-19.

In an eighth aspect, an embodiment of the present application provides a computer-readable storage medium, where the computer-readable storage medium stores a computer-executable instruction, and the computer-executable instruction is used to, when being executed by the processor, implement the communication method according to any one of claims 20-38.

Embodiments of the present application provide a communication method and apparatus, the method including: determining, according to first bandwidth information corresponding to a first random access channel occasion RO, an initial uplink bandwidth part BWP. By determining the initial uplink BWP according to the first bandwidth information corresponding to the first RO, it is effectively ensured that the initial uplink BWP will not exceed the terminal bandwidth of the terminal device, thereby ensuring that the terminal device can perform normal uplink data transmission.

### BRIEF DESCRIPTION OF DRAWINGS

FIG. 1 is a schematic diagram of a communication scenario provided by an embodiment of the present application.
FIG. 2 is a schematic diagram of a BWP provided by an embodiment of the present application.
FIG. 3 is a configuration schematic diagram of an initial uplink BWP in prior art provided by an embodiment of the present application.
FIG. 4 is a schematic diagram of an association relationship between RO resources and associated objects of an embodiment of the present application.
FIG. 5 is a schematic flow chart of a 4-step RACH provided by an embodiment of the present application.
FIG. 6 is a schematic flow chart of a 2-step RACH provided by an embodiment of the present application.
FIG. 7 is a flow chart I of the communication method provided by an embodiment of the present application.
FIG. 8 is a schematic configuration diagram I of an initial uplink BWP provided by an embodiment of the present application.
FIG. 9 is a schematic configuration diagram II of an initial uplink BWP provided by an embodiment of the present application.
FIG. 10 is a schematic configuration diagram III of an initial uplink BWP provided by an embodiment of the present application.
FIG. 11 is a schematic configuration diagram IV of an initial uplink BWP provided by an embodiment of the present application.
FIG. 12 is a flow chart II of the communication method provided by an embodiment of the present application.
FIG. 13 is a schematic structural diagram I of a communication apparatus provided by an embodiment of the present application.
FIG. 14 is a schematic structural diagram II of a communication apparatus provided by an embodiment of the present application.
FIG. 15 is a schematic structural diagram of a terminal device provided by an embodiment of the present application.
FIG. 16 is a schematic structural diagram of a network device provided by an embodiment of the present application.

### DESCRIPTION OF EMBODIMENTS

For ease of understanding, the concepts involved in the present application will be explained first.

3GPP: 3rd Generation Partnership, 3rd generation partnership project.

Terminal device: a device that includes wireless transceiving functions and can cooperate with network devices to provide communication services for users. Specifically, the terminal device can refer to user equipment (User Equipment, UE), an access terminal, a user unit, a user station, a mobile station, a mobile platform, a remote station, a remote terminal, a mobile device, a user terminal, a terminal, a wireless communication device, a user agent or user apparatus. For example, the terminal device may be a cellular phone, a cordless phone, a session initiation protocol (Session Initiation Protocol, SIP) phone, a wireless local loop (Wireless Local Loop, WLL) station, a personal digital processing (Personal Digital Assistant, PDA), handheld devices with wireless communication function, computing devices or other processing devices connected to wireless modems, vehicle-mounted devices, wearable devices, terminal devices in future 5G networks or networks after 5G, etc.

Network device: a network device can be a device for communicating with the terminal device, for example, it can be a base station (Base Transceiver Station, BTS) in a global system for mobile communication (Global System for Mobile Communication, GSM), or a base station (NodeB, NB) in a wideband code division multiple access (Wideband Code Division Multiple Access, WCDMA) system, or an evolutional base station (Evolutional NodeB, eNB or eNodeB) in an LTE system, or the network device can be a relay station, an access point, a vehicle-mounted device, a wearable device, a network-side device in a future 5G network or a network after 5G, or a network device in a future evolved public land mobile network (Public Land Mobile Network, PLMN) network, etc.

The network device involved in the embodiment of the present application can also be referred to as a radio access network (Radio Access Network, RAN) device. The RAN device is connected to the terminal device, and the RAN device is configured to receive data from the terminal device and send the data to a core network device. The RAN device corresponds to different devices in different communication systems, for example, the RAN device corresponds to base stations and base station controllers in 2G systems, corresponds to base stations and radio network controller (Radio Network Controller, RNC) in 3G systems, corresponds to evolutional base stations (Evolutional Node B, eNB) in 4G systems, and corresponds to 5G systems, such as access network devices in NR (for example, gNB, centralized units CU, distributed units DU), in 5G systems.

Random access procedure: a random access procedure refers to a process before a terminal device transmits a random access preamble to establish a basic signaling connection with a network device, and refers to the process of establishing a wireless link between the terminal device and the network device to obtain or restore uplink synchronization. Random access is a key step in a mobile communication system, which makes it possible for the terminal device and the network device to establish a communication connection. The terminal device exchanges information with the network device through random access, and can also achieve uplink synchronization through random access.

Beam: a beam refers to a shape of an electromagnetic wave on the earth's surface, the electromagnetic wave being emitted by antennas of a satellite, and the beam including a global beam, a spot beam, a shaped beam, etc., and the shape of the beam is determined by the antennas of the satellite.

RO: Random Access Channel Occasion, random access occasion.

Preamble: a preamble, a preamble code, which is a series of sequences sent by a terminal device to apply to access to a network, including but not limited to a gold sequence, an M sequence, a ZC sequence, etc. In addition to the main sequence, the preamble may also include a cyclic prefix and a guard time.

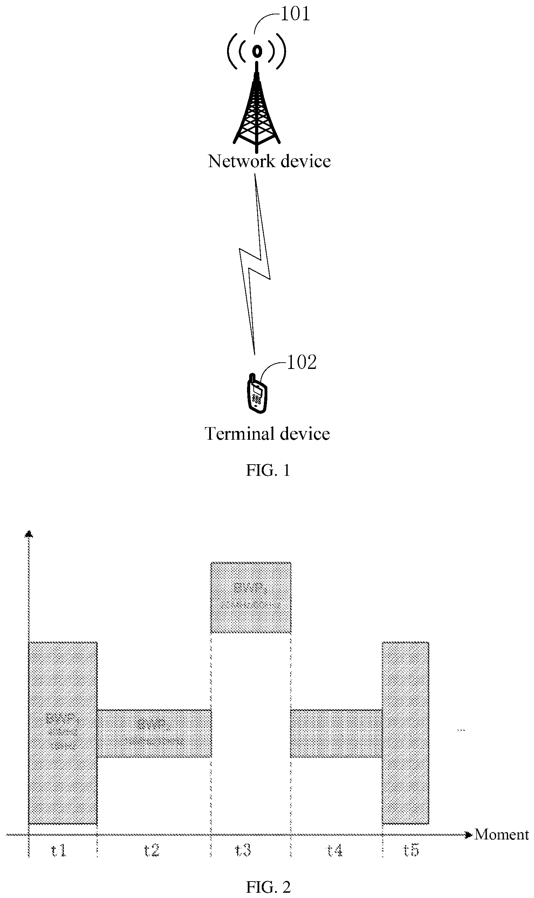

Subcarrier: the terminal device can support multiple subcarrier spacing types, such as 15kHz, 30kHz, 60kHz, 120kHz, 240kHz and/or 480kHz. In an orthogonal frequency duplex multiplexing (Orthogonal Frequency Duplex Multiplexing, OFDM) system, the type of subcarrier spacing is inversely proportional to the symbol length of OFDM, that is, the larger the subcarrier spacing is, the shorter the symbol length of OFDM is. For example, in FIG. 2, a time length of an OFDM symbol corresponding to a subcarrier spacing of 15kHz is four times of a time length of an OFDM symbol corresponding to a subcarrier spacing of 60kHz.

In the following, with reference to FIG. 1, a scenario to which the communication method in the present application is applicable will be described.

FIG. 1 is a schematic diagram of a communication scenario provided by an embodiment of the present application. Referring to FIG. 1, FIG. 1 includes a network device 101 and a terminal device 102, where wireless communication can be performed between the network device 101 and the terminal device 102.

A network including the network device 101 and the terminal device 102 can also be referred to as a non-terrestrial network (Non-Terrestrial Network, NTN), where the NTN refers to a communication network between the terminal device and a satellite (also referred to as the network device).

It can be understood that the technical solution of the embodiment of the present application can be applied to new radio (New Radio, NR) communication technology, where the NR refers to new generation of wireless access network technology, which can be applied to a future evolutionary network, such as the 5th generation mobile communication (the 5th Generation Mobile Communication, 5G) system in the future. The solution in the embodiment of the present application can also be applied to other wireless communication networks such as wireless fidelity (Wireless Fidelity, WIFI) and long term evolution (Long Term Evolution, LTE), and the corresponding name can be replaced with names of corresponding functions in other wireless communication networks.

The network architecture and service scenario described by the embodiments of the present application is to describe the technical solutions of the embodiments of the present application more clearly, which do not constitute limitations to the technical solutions provided by the embodiments of the present application. Those skilled in the art would know that, as the network architecture evolves and new service scenario emerges, the technical solutions provided by the embodiments of the present application are also applicable to similar technical problems.

Related technical background of the present application will be described in the following.

With the continuous evolution and assistance of wireless communication technology, Internet of things (Internet of things, IoT) technology has also ushered in rapid development, such as machine type communication (Machine Type Communication, MTC)/enhance machine type communication (Enhance Machine Type Communication, eMTC) promoted by 3GPP organization, narrow band Internet of things (NB-IoT) series standards have become the candidate technical standards of 5G massive (Massive) MTC technology.

Among them, the technical standards introduced above are expected to play a huge role in all aspects of people's production and life, such as smart homes, smart cities, smart factories, remote monitoring and smart transportation.

At present, the existing MTC/eMTC terminal devices and NB-IoT terminal devices have the following technical advantages: low cost, low price, support for ultra-low power consumption, and support for deep and broad coverage scenarios. These technical advantages are conducive to the rapid popularization of Internet of Things technology in the early stage of development.

However, these technical advantages also make MTC/eMTC and NB-IoT limited in some application scenarios. Understandably, because the design goal of MTC/eMTC and NB-IoT is to support some applications with low data rate and high transmission delay, the above described MTC/eMTC terminal devices and NB-IoT terminal devices cannot be applied to some IoT scenarios that need a relatively high rate, such as video surveillance in intelligent security and industrial applications that require relatively low delay.

In this case, if an NR terminal device is directly adopted, since the design indicators of the NR terminal device, such as a transmission rate, a transmission delay, etc., far exceed the actual requirements of the Internet of Things scenario that requires relatively high speed described above, directly applying the NR terminal device to the Internet of Things scenario described above will lead to relatively high cost, which is not conducive to market competition.

Based on the above-mentioned problems, in order to improve the terminal system of 5G massive MTC scenario, it is currently necessary to design an NR MTC terminal device which supports the requirements of medium transmission rate and medium delay and has low cost. At present, 3GPP calls this NR MTC terminal device NR-light terminal device.

Based on the above description, it can be determined that an NR-light terminal device needs to support medium transmission rate, medium delay requirement and low cost. In order to make the NR-light terminal device meet these requirements, the following technical solutions can be adopted at present:
in a possible implementation, the cost of the terminal device can be reduced by reducing the receiving channels supported by the terminal device.

Specifically, at present, the NR terminal device needs to support at least two receiving channels, and in some frequency bands, the NR terminal device needs to support four receiving channels, in which each receiving channel includes components such as a receiving antenna, a filter, a power amplifier (Power Amplifier, PA), an analog to digital (Analog to Digital, AD) a sampler, etc.

Therefore, reducing the number of radio frequency channels (receiving channels) required by the NR terminal device can significantly reduce the cost of the terminal device. Some research results show that if the terminal device with two radio frequency channels is reduced to a terminal device with one radio frequency channel, the cost of the chip module in the terminal device can be reduced by about 1/3. Therefore, reducing the number of receiving channels and assembling fewer antennas can reduce the cost of the terminal device.

In another possible implementation, the cost of the NR-light terminal device and the power consumption of the NR-light terminal device can be reduced by reducing the transmission bandwidth supported by the terminal device.

Specifically, a normal NR terminal device usually supports a wide transmission bandwidth. For example, the current definition of a 5G frequency range includes FR1 (450MHz-6000MHz, also known as Sub-6GHz) and FR2 (24250MHz-52600MHz, also known as Above-6GHz or millimeter wave), in which the terminal device corresponding to FR1 needs to support a maximum bandwidth of 100MHz.

To reduce the cost and power consumption of the NR-light terminal device, the NR-light terminal device can be set to support smaller terminal bandwidth. For example, the NR-light terminal device can only support 5 Mega Hertz (Mega Hertz, MHz), 10MHz or 20MHz terminal bandwidth in FR1.

According to another possible implementation described above, it can be understood by those skilled in the art that in 5G NR, both the system bandwidth and the terminal bandwidth may reach hundreds of MHz or even several GHz to support high-speed mobile data transmission, but in actual data transmission, such a large bandwidth is not always needed. For example, when only low data rate transmission is needed (such as WeChat chat), it is enough for the terminal device to adopt only a small operating bandwidth, such as a 10MHz bandwidth.

In order to flexibly support the different bandwidth requirements of the above different scenarios, the concept of bandwidth part (Bandwidth Part, BWP) is introduced in 5G.

The bandwidth part can be a part of the system bandwidth (cell carrier bandwidth). For example, the system bandwidth is 100MHz, and the terminal device can adopt a bandwidth less than 100MHz, for example, 20MHz and 50MHz bandwidth parts can be used for data transmission within the system bandwidth. This bandwidth part can also be referred to as "carrier bandwidth part (carrier bandwidth part)", or "operating bandwidth (operating bandwidth)", or transmission bandwidth. In the embodiment of the present application, the name and abbreviation of the bandwidth part are not particularly limited.

According to the architecture of the communication system shown in FIG. 1, in 5G NR, BWP is supported in both frequency division duplex (Frequency Division Duplex, FDD) and time division duplex (Time Division Duplex, TDD) systems.

For example, a BWP may include continuous or discontinuous K>0 subcarriers; or, a BWP can be a frequency domain resource where N>0 non-overlapping continuous or discontinuous resource blocks (Resource Block) are located; or, a BWP is a frequency domain resource where M>0 non-overlapping continuous or discontinuous resource block groups (Resource Block Group, RBG) are located, and an RBG includes P>0 continuous RBs, where K, N, M and P are all integers.

In a possible implementation, the NR terminal device can be configured with up to 4 BWPs by high-level signaling, where the terminal device only needs to adopt a center frequency and a sampling rate of a corresponding BWP in the corresponding BWP. Moreover, respective BWPs are not only different in frequency and bandwidth, but can also correspond to different configurations. For example, the subcarrier spacing, CP type, SSB (PSS/SSS PBCH Block) period of respective BWPs can be configured differently to adapt to different services.

The network device can make the terminal device switch among multiple BWPs according to the service requirements of the terminal device. For example, when transmitting at a higher service rate, the terminal device can use a BWP with a relatively large bandwidth; when transmitting at a low service data rate, the terminal device can use BWP with a relatively small bandwidth.

A possible implementation of a BWP is described below with reference to FIG. 2, which is a schematic diagram of a BWP provided by an embodiment of the present application.

As shown in FIG. 2, a plurality of moments exist currently:
assuming that at a first moment t1, the traffic of the terminal device is relatively large, the network device can configure a large bandwidth (BWP1) for the terminal device, and it can be assumed that a frequency range of BWP1 is 15kHz-40MKz;
assuming that at a second moment t2, the traffic of the terminal device is relatively small, and the network device can configure a small bandwidth (BWP2) for the terminal device. It can be assumed that a frequency range of BWP2 is 15KHz-10MKz, as long as BWP2 can meet the basic communication requirements of the terminal device;
assuming that at a third moment t3, the network device finds that there is a wide range of frequency selective fading in the bandwidth where BWP1 is located, or resources in the frequency range where BWP1 is located are short. At this time, the network device can configure a new bandwidth (BWP3) for the terminal device, and it can be assumed that a frequency range of BWP3 is 60KHz-20MKz.

It can be understood by those skilled in the art that the above description of BWP with reference to FIG. 2 shows an exemplary situation. In the actual implementation process, the implementation manner of BWP can be selected according to the actual requirements, which is not particularly limited by the present embodiment.

In the actual implementation process, BWP can be divided into downlink BWP (Downlink BWP, DL BWP) and uplink BWP (Uplink BWP, UL BWP), where the network device can configure a plurality of DL BWPs and UL BWPs for the terminal device, and activate at least one DL BWP and at least one UL BWP.

In a possible implementation, the terminal device can receive a downlink signal sent by the network device on a DL BWP that is in an active state (i.e. active DL BWP), the downlink signal including but not limited to downlink control signaling, downlink data and a channel state information reference signal (Channel State Information Reference Signal, CSI-RS).

In addition, the terminal device can send an uplink signal on the UL BWP that is in an active state, the uplink signal including but not limited to uplink control signaling, uplink data, a scheduling request (Scheduling Request, SR), a sounding reference signal (Sounding Reference Signal, SRS), channel state information (Channel State Information, CSI)/a channel quality indicator (Channel Quality Indicator, CQI) feedback, etc.

When the network device communicates with the terminal device on the DL BWP and UL BWP that are in the active state, the network device can activate another BWP (DL or UL), so that the terminal switches (switch) to the new activated BWP to receive or send data.

It can be understood by those skilled in the art that after the radio resource control (Radio Resource Control, RRC) connection between the network device and the terminal device is established, the terminal device can use the uplink BWP configured by RRC for uplink data transmission. And before the RRC connection between the network device and the terminal device is established, the terminal device still needs to perform uplink transmission, such as the uplink transmission in an initial access process. In the uplink transmission of the initial access process, the terminal device can receive a system broadcast message from the network device to determine the initial (initial) UL BWP according to the system broadcast message, and to perform uplink data transmission according to the initial uplink BWP.

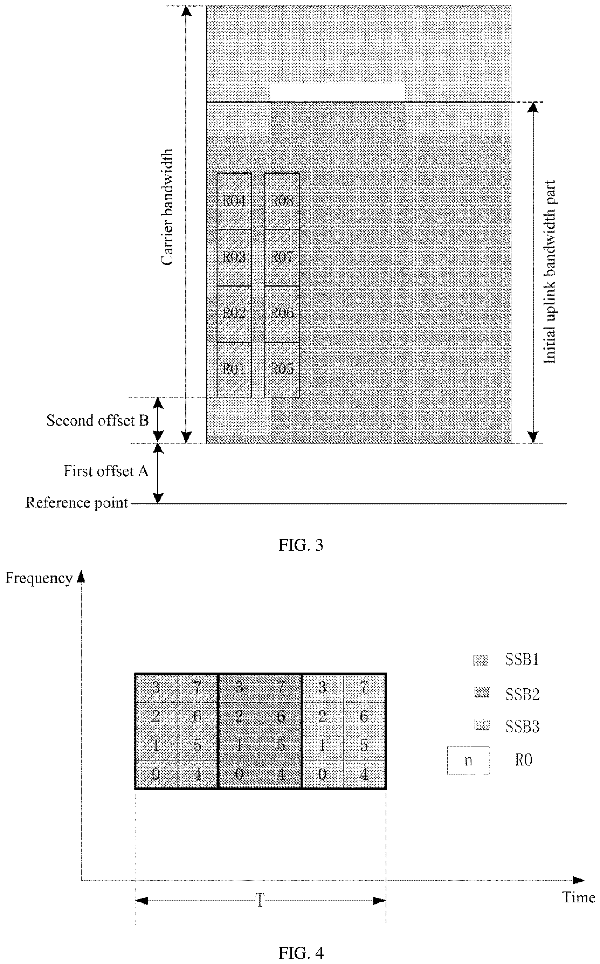

The implementation of configuring the initial uplink BWP in the prior art is described below with reference to FIG. 3. FIG. 3 is a schematic configuration diagram of an initial uplink BWP in the prior art provided by an embodiment of the present application.

As shown in FIG. 3, a reference point Point A is set. It can be understood by those skilled in the art that Point A is actually a frequency position, which can be indicated by a network device, or can be preset or predefined, which is not limited by the present embodiment.

Referring to FIG. 3, a carrier position where the system bandwidth is located and a carrier bandwidth can be configured based on the reference point Point A, where a start point of the carriers of the system bandwidth can be a frequency position relative to the reference point Point A by a first offset. In one possible implementation, the first offset may be offsettoCarrier (which is a number) physical resource blocks (Physical Resource Blocks, PRB), that is, the start point of the carriers of the system bandwidth can be a frequency position corresponding to an offset of offsettoCarrier PRBs relative to the reference point Point A.

On the basis of determining the carrier bandwidth, a frequency band position and a bandwidth of the initial uplink BWP can be further configured within the carrier bandwidth. In one possible implementation, the configuration method may be to indicate a starting PRB of the initial uplink BWP and the number of PRBs occupied by the initial uplink BWP according to a starting length indication vector (Starting Length Indication Vector, SLIV) parameter within the carrier bandwidth, so as to determine the position of the initial uplink BWP.

Furthermore, subcarrier spacing of the initial uplink BWP can also be configured.

Illustratively, the initial uplink BWP obtained through configuration may be shown as shaded portion in FIG. 3.

On the basis of the above-described initial uplink BWP, the physical random access channel (Physical Random Access Channel, PRACH) resource RO in NR is configured in the initial uplink BWP when random access procedure is performed.

The PRACH resource RO will be described first:
in the NR system, the network device can configure a plurality of frequency division multiplex (Frequency Division Multiplex, FDM) ROs at one time instance (time instance).

Within one PRACH resource configuration period, a plurality of time instances may exist, where the time instance may be a time duration required for transmission of one PRACH resource RO, or, the time instance may also be understood as a position of a time domain resource position used to transmit the PRACH resource RO.

In one possible implementation, in the NR, an association relationship may exist between the RO and a synchronization signal block (Synchronization Signal Block, SSB), where the SSB may also be referred to as a synchronization signal/physical broadcast channel block (Synchronization Signal/Physical Broadcast Channel Block, SS/PBCH Block).

In the NR, an association relationship may exist between the RO resource and the SSB that is actually sent by the network device, and a plurality of SSBs may be associated with one RO resource. Specifically, the number of SSBs that one RO resource may be associated with may be any one of the following: {1/8, 1/4, 1/2, 1, 2, 4, 8, 16}.

The following is an illustrative description of an association relationship between RO resources and SSBs with reference to FIG. 4. FIG. 4 is a schematic diagram of an association relationship between RO resources and associated objects in an embodiment of the present application.

For example, as shown in FIG. 4, assuming that there are three SSBs in FIG. 4, and these three SSBs are numbered with 1-3, which are specifically represented as: SSB1, SSB2 and SSB3 (in practical application, they can also be numbered with 0-2 and be specifically represented as: SSB0, SSB1 and SSB2).

Assuming that there are four RO resources performing FDM at a time instance. In FIG. 4, T represents a PRACH resource configuration period, one grid represents one RO resource, grids with different filling patterns represent RO resources associated with different SSBs, the number of rows in the grid represents the number of RO resources at a time instance, and the number of columns in the grid represents the number of time instances. The number of SSBs that are actually sent by the network device is smaller than or equal to the number of SSBs that the network device can send.

A scenario illustrated by FIG. 4 is that: one RO resource is associated with 1/8 SSB. In other scenarios when one RO resource is associated with 1/4, 1/2 ... SSBs, the implementation method can be expanded accordingly, which will not be repeated here.

In another possible implementation, an association relationship may also exist between the RO resource and a channel state information-reference signal (Channel State Information-Reference Signal, SCI-RS), and the implementation method is similar as described above, which will not be repeated here.

In the present embodiment, the association relationship between the RO resource and the SSB, or the RO resource and the CSI-RS is described. In addition, to utilize the RO to perform the random access procedure, a frequency corresponding to the RO also needs to be determined, where during the random access procedure, the RO is configured in the initial uplink BWP.

The implementation of configuration of ROs will be described below with reference to FIG. 3. FIG. 3 is a schematic configuration diagram of ROs provided by the embodiment of the present application. As shown in FIG. 3:
in the implementation process, the system can configure the number of ROs multiplexed through FDM in the frequency domain. Assuming that the number of multiplexed ROs is 4, as shown in FIG. 3, there are 4 ROs at a time instance, where a frequency start point of the first RO is configured relative to the first PRB (PRB0) of the initial uplink BWP. For example, the frequency start point of the first RO can be configured as a frequency position relative to PRB0 by a second offset. In one possible implementation, the second offset can be msg1-frequencystart (which is a number) PRBs, that is, the frequency start point of the first RO is offset by msg1-frequencystart PRBs relative to PRB0.

In a possible implementation, the network device may also inform the terminal device of the time slot occupied by the PRACH, the symbol occupied by the PRACH in the time slot, and the PRACH format (format), etc., through a system broadcast message.

A specific bandwidth occupied by each RO can be determined according to the format of the PRACH, that is, each PRACH format corresponds to the bandwidth occupied by the respective RO, which is not limited by the present embodiment.

The bandwidth occupied by the RO corresponding to some preamble formats will be described in the following with reference to Table. 1:

**Table 1:**

| **Preamble sequence length** | | **Subcarrier spacing of the PRACH** | | **Subcarrier spacing of the PUSCH** | | Represented by the number of PRBs of the **PUSCH** | |
|---|---|---|---|---|---|---|---|
| | 839 | | 1.25 | | 15 | | 6 |
| | 839 | | 1.25 | | 30 | | 3 |
| | 839 | | 1.25 | | 60 | | 2 |
| | 839 | | 5 | | 15 | | 24 |
| | 839 | | 5 | | 30 | | 12 |
| | 839 | | 5 | | 60 | | 6 |
| | 139 | | 15 | | 15 | | 12 |
| | 139 | | 15 | | 30 | | 6 |
| | 139 | | 15 | | 60 | | 3 |
| | 139 | | 30 | | 15 | | 24 |
| | 139 | | 30 | | 30 | | 12 |
| | 139 | | 30 | | 60 | | 6 |
| | 139 | | 60 | | 60 | | 12 |
| | 139 | | 60 | | 120 | | 6 |
| | 139 | | 120 | | 60 | | 24 |
| | 139 | | 120 | | 120 | | 12 |

The meaning of the table will be illustrated first by taking the first row of Table 1 as an example.

In a possible implementation, a sequence length of a certain preamble format may be 839, and the subcarrier spacing of the corresponding PRACH is 1.25KHz. As the expression of 1.25KHz is not commonly used, the commonly used subcarrier spacing of PUSCH can be adopted to represent the bandwidth occupied by the current preamble format. For example, the bandwidth is represented by the subcarrier spacing of PUSCH of 15KHz, and correspondingly the PRB of PUSCH corresponding to the current RO is 6, where one PRB includes 12 subcarriers, that is, in this format, the bandwidth corresponding to the RO is 15KHz×12×6=1080KHz.

Based on the meaning of Table 1 described above, referring to some rows in Table 1, it can be seen that the ROs corresponding to the preamble format in the fourth row and the tenth row need to occupy 24 PRBs with 15KHz subcarrier spacing, so the bandwidth occupied by the RO in the current format is: 15kHz × 12 × 24 = 4329KHz = 4.329MHz;
and, the ROs corresponding to the preamble format in the fifth row and eleventh row need to occupy 12 PRBs with 30KHz subcarrier spacing, so the bandwidth occupied by the RO in the current format is: 30KHz × 12 × 12 = 4320KHz = 4.32MHz.

Therefore, the bandwidth occupied by one RO is already close to 5MHz. It can be determined according to the above description about the NR-light terminal device that the bandwidth of the NR-light terminal device is relatively narrow, for example, the bandwidth may be 5MHz or 10MHz.

The bandwidth occupied by one RO is already close to 5MHz, and when the system configures more than one such FDM ROs in the frequency domain, obviously the 5MHz bandwidth of the terminal device will be exceeded; when the system configures more than two such FDM ROs in the frequency domain, obviously the 10MHz bandwidth of the terminal device will be exceeded.

However, on the other hand, it can be determined according to the above description that all ROs need to be configured in the initial uplink BWP. Therefore, in such case, a circumstance may occur that the bandwidth of the initial uplink BWP configured by the network device is greater than the terminal bandwidth of the terminal device.

When the bandwidth of the initial uplink BWP configured by the network device is greater than the bandwidth of the terminal device, the terminal device cannot perform normal uplink data transmission on the terminal bandwidth, which will lead to abnormal uplink data transmission.

Aiming at the problem in the prior art, the present application proposes the following technical concept: instead of determining the initial uplink BWP by adopting configuration of the network device, determining the initial uplink BWP based on frequency bands occupied by the terminal device for PRACH transmission.

Before describing the communication method provided by the present application, as the communication scenario involved in the present application may be that the terminal device performs a random access procedure so as to send a PRACH, based on this, the random access procedure will be briefly described at first, so as to describe the solutions provided in the present application in more detail.

The random access may include 4-step random access (also referred to as 4-step random access channel, or simply referred to as 4-step RACH, contention based random access) and 2-step random access (also referred to as 2-step random access channel, or simply referred to as 2-step RACH, non-contention based random access), and the random access involved in the embodiments of the present application is mainly 2-step random access. For better understanding, the procedures of 4-step RACH and 2-step RACH will be described below respectively.

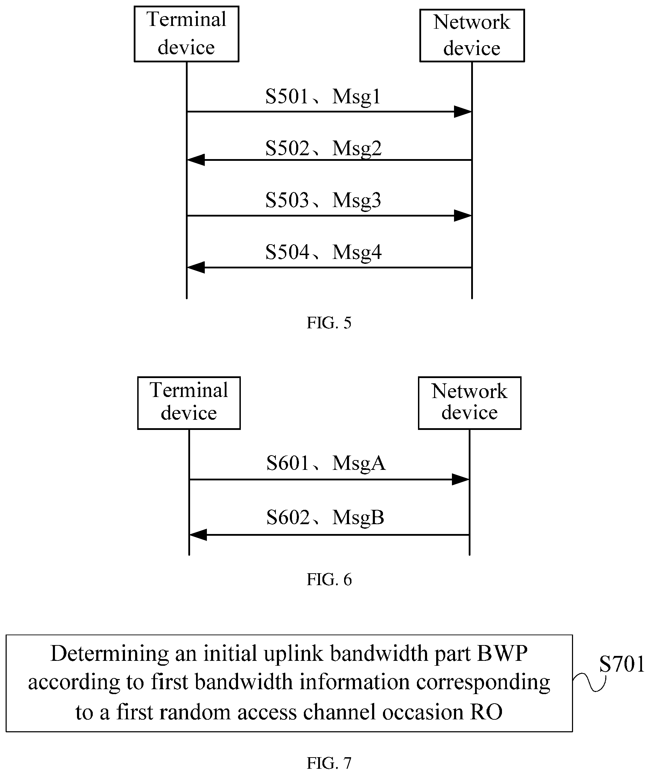

FIG. 5 is a schematic flow chart of a 4-step RACH provided by an embodiment of the present application. The 4-step RACH has already been explicitly defined in the present protocol TS38.300, which will only be simply described in the present application. Referring to FIG. 4, the method may include:
S501, a terminal device sends a Msg1 to a network device.

The Msg1 may also be referred to as msg1 or MSG1.

The Msg1 is used to transmit a random access preamble, where the random access preamble may also be referred to as a random access preamble sequence, a preamble, or a preamble sequence.

In the embodiment of the present application, time-frequency resources occupied by the preamble or preamble transmission may be referred to as physical random access channel (Physical Random Access Channel, PRACH) resources.

Optionally, the terminal device can select a PRACH resource and a preamble, and send the selected preamble on the selected PRACH resource. If the random access manner is non-competition based random access, then a base station can specify a PRACH resource and a preamble, and the base station can estimate a timing advance (Timing Advance, TA) and a size of uplink grant required by the terminal device for Msg3 transmission based on the preamble sent by the terminal device.

For example, the network device can broadcast available PRACH resources through system information.

S502, the network device sends a Msg2 to the terminal device.

The Msg2 may also be referred to as msg2 or MSG2.

The Msg2 includes a time-frequency resource, determined by the network device, used by the terminal device to send payload (payload).

After sending the Msg1, the terminal device may open an RA-response window (RA-Response Window), and monitor a physical downlink control channel (Physical Downlink Control Channel, PDCCH) scrambled by a random access radio network temporary identifier (Random Access Radio Network Temporary Identifier, RA-RNTI) within the RA-response window.

The RA-RNTI is related to the time-frequency resource of the PRACH used by the terminal device to send the Msg1.

After the terminal device successfully receives the PDCCH scrambled by the RA-RNTI, the terminal device is able to obtain a physical downlink shared channel (Physical Downlink Shared Channel, PDSCH) scheduled by the PDCCH, where the PDSCH includes a random access response (Random Access Response, RAR). The RAR may include the following information:
a subhead of the RAR including a back-off indicator (Back-off Indicator, BI) used to indicate a back-off time for Msg1 retransmission;
RAPID in the RAR: a preamble index received and responded by the network;
payload (payload) of the RAR including a timing advance group (Timing Advance Group, TAG) used to adjust uplink timing;
uplink (Up Link, UL) grant: an uplink resource indication used to schedule Msg3; and
temporary (temporary) cell radio network temporary identifier (Cell Radio Network Temporary Identifier, C-RNTI): a PDCCH used to scramble Msg4.

If the terminal receives a PDCCH scrambled by the RAR-RNTI, and the RAR includes the preamble index sent by itself, then the terminal considers that the random access response is successfully received.

For non-competition based random access, after the terminal receives the Msg2 successfully, the random access procedure ends. For competition based random access, after the terminal receives the Msg2, the terminal further needs to continue to transmit Msg3 and receive Msg4.

S503, the terminal device sends a Msg3 to the network device.

The Msg3 may also be referred to as msg3 or MSG3.

The Msg3 is a first scheduling transmission during the random access procedure, sending payload (payload), for example, an RRC connection request message, a tracking area update message, etc.

The Msg3 can inform the network device of what event triggers the RACH procedure. For example, if it is an initial access random procedure, the Msg3 will carry a UE ID and an establishment cause (establishment cause); if it is an RRC reestablishment, the Msg3 will carry a UE identifier in a connected state and an establishment cause (establishment cause).

It needs to be noted that, if different terminal devices select the same preamble in S301 and send the preamble in the same time-frequency resource, then the different terminal devices send payload in the same time-frequency resource, thus resulting in resource usage conflict.

S504, the network device sends a Msg4 to the terminal device.

The Msg4 may also be referred to as msg4 or MSG4.

The Msg4 is used to indicate whether the terminal device successfully accesses to the network device.

The Msg 4 has the following two functions: one is to solve competition conflict. The other one is that the network device transmits an RRC configuration message to the terminal device. The competition conflict can be solved by the following two methods: one is that if the terminal device carries the C-RNTI in the Msg3, then the Msg4 is scheduled by a PDCCH scrambled by the C-RNTI. The other one is that if the terminal device does not carry the C-RNTI in the Msg3, for example for the initial access, then the Msg4 is scheduled by a PDCCH scrambled by a TC-RNTI. The conflict is solved by that the terminal device receives a PDSCH of the Msg4, through matching a common control channel (Common Control Channel, CCCH) service data unit (Service Data Unit, SDU) in the PDSCH.

FIG. 6 is a schematic flow chart of a 2-step RACH provided by an embodiment of the present application. Referring to FIG. 6, the method may include:
S601, a terminal device sends a MsgA to a network device.

The MsgA may also be referred to as msgA or MSGA.

The msgA includes a preamble and payload (for example, an RRC connection request message, a tracking area update message, etc.).

S602, the network device sends a msgB to the terminal device.

The msgB may also be referred to as MsgB or MSGB, which is used to indicate whether the terminal device successfully accesses to the network device.

It can be seen from the above random access procedure that the main purpose of random access is to achieve uplink synchronization between the terminal device and the network device (cell).

On the basis of the above description, the technical solution shown in the present application will be described in detail by specific embodiments below. It should be noted that the following embodiments can exist independently or be combined with each other. For the same or similar contents, the description will not be repeated in different embodiments.

The communication method on the terminal device side provided by the embodiment of the present application will be described in detail with reference to FIG. 7, which is a flow chart I of a communication method provided by an embodiment of the present application.

As shown in FIG. 7, the method includes:
S701, determining an initial uplink bandwidth part BWP according to first bandwidth information corresponding to a first random access channel occasion RO.

In the present embodiment, in the process of transmission, the first RO occupies a time domain resource and a frequency domain resource. From the perspective of frequency domain resources, the first RO corresponds to the first bandwidth information, where the first bandwidth information is used to indicate a frequency range corresponding to the first RO.

In a possible implementation, the first bandwidth information, for example, may include a bandwidth; or may include a frequency position; or, may also include a subcarrier width, etc. The specific implementation of the first bandwidth information is not particularly limited by the present embodiment, which can be selected according to the actual requirements. Any information used to indicate the frequency range corresponding to the first RO can be used as the first bandwidth information in the present embodiment.

In the present embodiment, the initial uplink bandwidth part BWP is determined according to the first bandwidth information, where the initial uplink BWP is used to send uplink data to the network device before the network device configures an uplink BWP for the terminal device.

It can be determined based on the above description that, the bandwidth occupied by a single RO may be close to the terminal bandwidth of the terminal device, but does not exceed the terminal bandwidth of the terminal device. Therefore, by determining the initial uplink BWP according to the first bandwidth information corresponding to the first RO, it is effectively ensured that the initial uplink BWP will not exceed the terminal bandwidth of the terminal device, thereby ensuring that the terminal device can perform normal uplink data transmission.

Possible implementations for determining the first RO will be described here:
in a possible implementation, before sending a PRACH, the terminal device will measure a channel quality based on a downlink reference signal, such as an SS/PBCH block or a CSI-RS, so as to select an RO corresponding to the SS/PBCH or CSI-RS with a better (e.g., greater than a specific threshold) reference signal receiving power (Reference Signal Receiving Power, RSRP), where the association relationship between an SS/PBCH block and an RO and the association relationship between a CSI-RS and an RO have already been described in the above embodiments, and will not be repeated here.

Based on the above description, those skilled in the art can determine that one SS/PBCH block can correspond to at least one RO, and one CSI-RS can also correspond to at least one RO. Then, when the terminal device determines the RO corresponding to the SS/PBCH or the CSI-RS, in one possible implementation, the terminal device can randomly select one RO from a plurality of ROs corresponding to the SS/PBCH or the CSI-RS.

After the RO is determined, there may be a plurality of preamble indexes corresponding to one RO, and the terminal device may select a certain preamble index in the RO. In a possible implementation, the terminal device may randomly select one preamble index among the plurality of preamble indexes, and then the terminal device sends the preamble to the network device in the selected RO, where different beams correspond to different SS/PBCH blocks or CSI-RSs, so the RO used by the terminal device to send the PRACH is related to a beam position where the terminal device is located, which also means that different terminals may have different ROs to send a PRACH.

As can be understood by those skilled in the art, the transmission of PRACH may not be unsuccessful, so the terminal device may need to retransmit the PRACH. Correspondingly, the terminal device may need to send the PRACH many times before the terminal device completes the random access procedure, and each time the terminal device sends the PRACH, the terminal device may change the RO for sending the PRACH.

Regarding the case that the above mentioned terminal device may change the RO for sending the PRACH, following situations may happen:
in a possible situation, if one SS/PBCH block corresponds to at least two ROs, or one CSI-RS corresponds to at least two ROs, then the terminal device may randomly select one RO from the at least two ROs corresponding to the SS/PBCH block or the CSI-RS, and at this time the terminal device may change the RO for sending the PRACH;
in another possible situation, if one SS/PBCH block corresponds to one RO or one CSI-RS corresponds to one RO, the terminal device can only select the one RO corresponding to the SS/PBCH block or the CSI-RS, that is, at this time the terminal device does not change the RO for sending the PRACH.

In an actual implementation process, the selection of RO is made according to the actual situation, and the basis of the selection is the content described above, which is not limited in the present embodiment.

Therefore, in a possible implementation, the first RO in the present embodiment may be an RO corresponding to a PRACH that satisfies a first preset condition among a plurality of ROs, where the first preset condition may include at least one of the following: the terminal device receives a random access response (Random Access Response, RAR) after sending the PRACH in the first RO, the terminal device receives the message msg4 response after sending the PRACH in the first RO, and the terminal device completes the random access procedure after sending the PRACH in the first RO.

That is, in a possible implementation, the terminal device can determine the first RO based on the RO occupied by the last successfully transmitted PRACH, where the successfully transmitted PRACH refers to that: the terminal device receives an RAR response from the network device for this PRACH transmission; or, the terminal device receives a msg4 response; or, the terminal device completes the random access procedure.

By determining the RO that satisfies the first preset condition as the first RO, the accuracy and stability of determining the initial uplink BWP according to the bandwidth information corresponding to the current first RO can be ensured, so as to avoid the change of the initial uplink BWP caused by the change of RO subsequently.

The communication method provided by the embodiments of the present application includes: determining, according to first bandwidth information corresponding to a first random access channel occasion RO, an initial uplink bandwidth part BWP. By determining the initial uplink BWP according to the first bandwidth information corresponding to the first RO, it is effectively ensured that the initial uplink BWP will not exceed the terminal bandwidth of the terminal device, thereby ensuring that the terminal device can perform normal uplink data transmission.

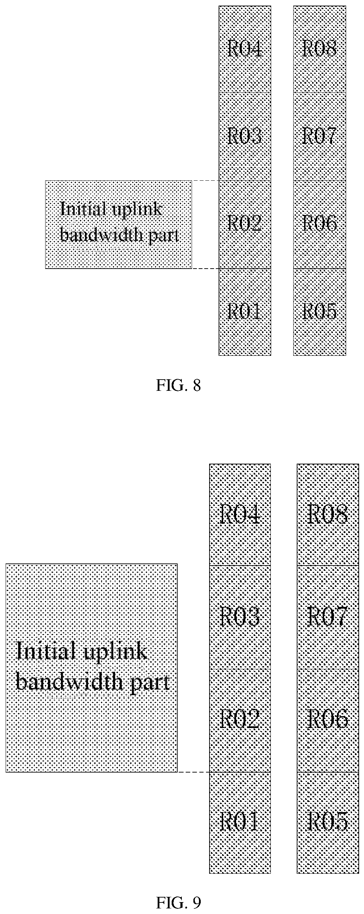

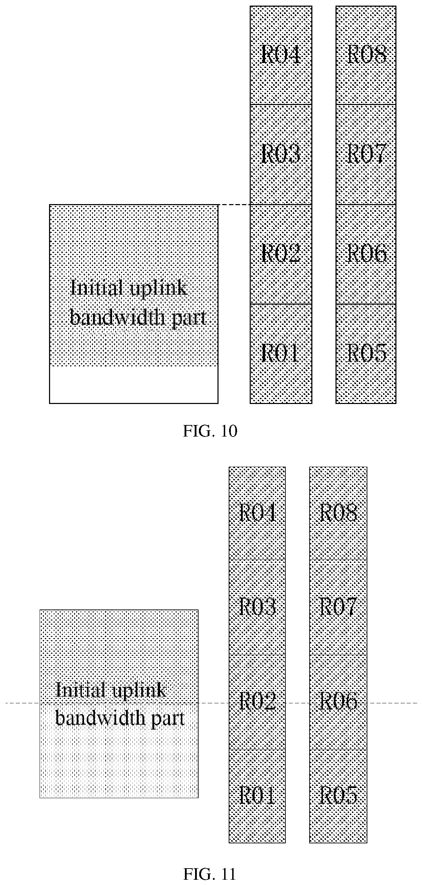

On the basis of the above embodiments, several possible implementations of determining the initial uplink BWP according to the first bandwidth information will be described with reference to specific embodiments. It will be described with reference to FIG. 8 to FIG. 11. FIG. 8 is a schematic configuration diagram I of an initial uplink BWP provided by an embodiment of the present application; FIG. 9 is a schematic configuration diagram II of an initial uplink BWP provided by an embodiment of the present application; FIG. 10 is a schematic configuration diagram III of an initial uplink BWP provided by an embodiment of the present application; FIG. 11 is a schematic configuration diagram IV of an initial uplink BWP provided by an embodiment of the present application.

Referring to FIG. 8, in a possible implementation:
the first bandwidth information includes a first bandwidth and/or a first frequency position.

Then a second bandwidth of the initial uplink BWP can be determined according to the first bandwidth; and/or
a second frequency position of the initial uplink BWP can be determined according to the first frequency position.

The second bandwidth and the first bandwidth are the same; the first frequency position and the second frequency position are the same.

That is, the bandwidth of the first RO can be determined as the bandwidth of the initial uplink BWP, and/or, the frequency position occupied by the first RO can be determined as the frequency position of the initial uplink BWP.

With reference to FIG. 8, the implementation of determining the bandwidth and frequency position of the first RO as the bandwidth and frequency position of the initial uplink BWP will be described in the following, and other implementation methods are similar and will not be repeated here:
referring to FIG. 8, assuming that an NR light terminal device selects an RO2 as the RO for sending the PRACH and the RO2 satisfies the first preset condition, then the first bandwidth occupied by the RO2 and the first frequency position occupied by the RO2 are determined as the second bandwidth and the second frequency position of the initial uplink BWP.

In the present embodiment, the first frequency position and the second frequency position may include a frequency start position and/or a frequency end position and/or a frequency center point.

Referring to FIG. 9, in another possible implementation:
the first bandwidth information includes a first frequency start position.

A second frequency start position of the initial uplink BWP can be determined according to the first frequency start position.

The first frequency start position and the second frequency start position are the same.

That is, the start position of the frequency occupied by the first RO is determined as the start position of the frequency occupied by the initial uplink BWP.

Referring to FIG. 9, assuming that the NR light terminal device selects the RO2 as the RO for sending the PRACH and the RO2 satisfies the first preset condition, then the first frequency start position of the frequency occupied by the RO2 is determined as the second frequency start position of the initial uplink BWP.

In a possible implementation, other parameters, such as a bandwidth of the initial uplink BWP, subcarrier spacing, etc., used by the NR light terminal device may be indicated by a system broadcast message sent by the network device. Then the system broadcast message from the network device can be received, so as to determine the second bandwidth of the initial uplink BWP and the subcarrier spacing of the initial uplink BWP according to the system broadcast message.

The initial uplink BWP can be determined according to the second frequency start position and the bandwidth.

Referring to FIG. 10, in another possible implementation:
the first bandwidth information includes a first frequency end position.

A second frequency end position of the initial uplink BWP can be determined according to the first frequency end position.

The second frequency end position and the first frequency end position are the same.

That is, the end position of the frequency occupied by the first RO is determined as the end position of the frequency of the initial uplink BWP.

Referring to FIG. 10, assuming that the NR light terminal selects the RO2 as the RO for sending the PRACH, and the RO2 satisfies the first preset condition, then the first frequency end position of the frequency occupied by the RO2 is determined as the second frequency end position of the initial uplink BWP.

In a possible implementation, other parameters, such as a bandwidth of the initial uplink BWP, subcarrier spacing, etc., used by the NR light terminal device may be indicated by a system broadcast message sent by the network device. Then the system broadcast message from the network device can be received, so as to determine the second bandwidth of the initial uplink BWP and the subcarrier spacing of the initial uplink BWP according to the system broadcast message.

The initial uplink BWP can be determined according to the second frequency end position and the bandwidth.

Referring to FIG. 11, in another possible implementation:
the first bandwidth information includes a first frequency center point.

A second frequency center point of the initial uplink BWP can be determined according to the first frequency center point.

The first frequency center point and the second frequency center point are the same.

That is, the center point of the frequency occupied by the first RO is determined as the center point of the frequency of the initial uplink BWP.

Referring to FIG. 11, assuming that the NR light terminal device selects the RO2 as the RO for sending the PRACH and the RO2 satisfies the first preset condition, then the first frequency center point of the frequency occupied by the RO2 is determined as the second frequency center point of the frequency position of the initial uplink BWP.

In a possible implementation, other parameters, such as a bandwidth of the initial uplink BWP, subcarrier spacing, etc., used by the NR light terminal device may be indicated by a system broadcast message sent by the network device. Then the system broadcast message from the network device can be received, so as to determine the second bandwidth of the initial uplink BWP and the subcarrier spacing of the initial uplink BWP according to the system broadcast message.

The initial uplink BWP can be determined according to the second frequency center point and the bandwidth.

On the basis of the above embodiments, in a possible implementation, although the terminal device determines the initial uplink BWP based on the first RO for sending the PRACH, the network device will still configure the initial uplink BWP for the terminal device through the system broadcast message. In the present embodiment, the initial uplink BWP configured by the network device is referred to as a second initial uplink BWP, to distinguish from the initial uplink BWP described in the above embodiments. It is worth noting that although the network device will perform configuration, the terminal device will not determine based on such configuration.

However, it needs to be noted here that although the terminal device will not determine the initial uplink BWP by using the configuration of the network device, when determining the configuration information of the RO, the terminal device can still determine according to the second initial uplink BWP configured by the network device. For the specific determination method, reference can be made to the description in the above-mentioned embodiment of FIG. 3, which will not be repeated here.

By determining the configuration information of the RO according to the second initial uplink BWP configured by the network device, the initial uplink BWP can be determined according to the first RO under the existing RO configuration mechanism, so that the technical solution of the present application can be realized without changing signaling, so as to realize the compatibility between terminal devices and realize the sharing of ROs among different terminal devices.

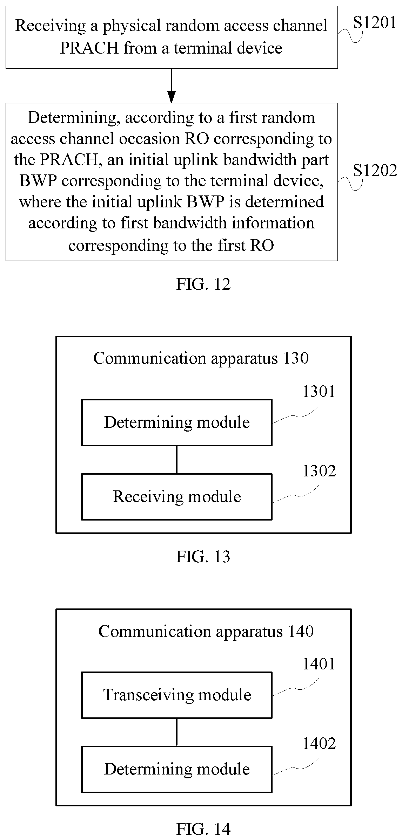

On the basis of the above embodiment, the terminal device determines to send the PRACH through the first RO, and in the initial access process, the subsequent uplink data transmission can also be transmitted on the frequency band corresponding to the first RO, so that the terminal device does not need to switch the transmission frequency between sending of the PRACH and the subsequent uplink data transmission. Based on this, it can be determined by those skilled in the art that the network device also needs to determine the initial uplink BWP for the terminal to send the uplink data, so as to perform data reception. The communication method on the network device side will be described in the following with reference to FIG. 12.

FIG. 12 is a flow chart II of a communication method provided by an embodiment of the present application.

As shown in FIG. 12, the method includes:
S1201, receiving a physical random access channel PRACH from a terminal device.

In a random access procedure, the terminal device sends the PRACH to the network device, so the network device can receive the PRACH sent by the terminal device.

S1202, determining, according to a first random access channel occasion RO corresponding to the PRACH, an initial uplink bandwidth part BWP corresponding to the terminal device, where the initial uplink BWP is determined according to first bandwidth information corresponding to the first RO.

In the present embodiment, the PRACH corresponds to the first RO. It can be understood that the first RO is an RO that satisfies a second preset condition and sends the above PRACH. The specific implementation of the first RO is similar to that described in the above embodiments. The only difference is that the first RO in the present embodiment needs to satisfy the second preset condition, where the second present condition and the first present condition have some differences.

The following is a description of the second preset condition, where the second preset condition includes at least one of the following: receiving a PRACH from the terminal device in the first RO, and receiving a message msg3 response from the terminal device in the first RO, where the msg3 response is a response message corresponding to the PRACH.

Based on the random access procedure described above, it can be determined by those skilled in the art that the terminal device will first send the PRACH to the network device, if the network device successfully receives the PRACH from the terminal device, then the network device can determine the corresponding RO in which the terminal device sends uplink data, and then the first RO can be determined, or, the network device may determine the first RO when receiving the msg3 response from the terminal device.

An example is taken where the network device receives the PRACH from the terminal device, it should be emphasized here that in the first preset condition, the terminal device also needs to receive the RAR sent by the network device before the terminal device can determine the first RO. However, the network device can determine the first RO before sending the RAR to the terminal device. That is to say, the first RO determined by the network device is the same as the first RO determined by the terminal device, and only determination times of the two are different.

In a possible implementation, if the network device receives the PRACH from the terminal device, and determines the first RO corresponding to the PRACH, then the network device will send an RAR to the terminal device, and a situation may occur that the terminal device does not receive the RAR. Under such situation, the terminal does not receive the RAR, and will consider that random access fails, and may re-send the PRACH, in this way, the first RO determined by the terminal device is definitely the same as the first RO determined by the network device.

In the present embodiment, the initial uplink BWP corresponding to the terminal device may be determined according to the first RO corresponding to the PRACH, where the initial uplink BWP corresponding to the terminal device is determined according to the first bandwidth information corresponding to the first RO, for the specific implementation, reference can be made to the description in the above embodiments, which will not be repeated here.

The communication method provided by the embodiment of the present application includes: receiving a physical random access channel PRACH from a terminal device; and determining, according to a first random access channel occasion RO corresponding to the PRACH, an initial uplink bandwidth part BWP corresponding to the terminal device, where the initial uplink BWP is determined according to first bandwidth information corresponding to the first RO. By determining the initial uplink BWP according to the first bandwidth information corresponding to the first RO, it is effectively ensured that the initial uplink BWP will not exceed the terminal bandwidth of the terminal device, thereby ensuring that the terminal device can perform normal uplink data transmission.

At the same time when determining the initial uplink BWP according to the first bandwidth information of the first RO as described above, in another possible implementation, a frequency bandwidth occupied by some ROs is only 6 PRBs of 15KHz, and at this time, the bandwidth of the NR light terminal device may not be a bottleneck of the uplink data transmission. That is to say, under such situation, it can be normally performed that the terminal device performs uplink data transmission according to the second initial uplink BWP configured by the network device.

Under such situation, the NR-light terminal device may determine the second initial uplink BWP based on system broadcast information configured by the network device.

However, if the network device does not configure the initial uplink BWP for the NR-light terminal (for example, the terminal device does not receive the configuration information of the second initial uplink BWP in the system broadcast message), then the initial uplink BWP can be determined according to the first bandwidth information of the first RO as described above.

In conclusion, when the terminal device receives the configuration information of the second initial uplink BWP, and the second initial uplink BWP is not greater than the terminal bandwidth of the terminal device, the second initial uplink BWP can be determined by adopting the configuration information of the second initial uplink BWP configured by the network device;
when the terminal device does not receive the configuration information of the second initial uplink BWP, or the second initial uplink BWP is greater than the terminal bandwidth of the terminal device, the initial uplink BWP can be determined by adopting the first bandwidth information corresponding to the first RO.

In practical implementations, selection can be performed in the above two methods according to actual circumstances, which will not be particularly limited by the present embodiment.

FIG. 13 is a schematic structural diagram I of a communication apparatus provided by an embodiment of the present application. Referring to FIG. 13, the communication apparatus 130 may include a determining module 1301 and a receiving module 1302, where
the determining module 1301 is configured to determine, according to first bandwidth information corresponding to a first random access channel occasion RO, an initial uplink bandwidth part BWP.

In a possible implementation, the first bandwidth information is used to indicate a frequency range corresponding to the first RO.

In a possible implementation, the first bandwidth information includes a first bandwidth and/or a first frequency position.

In a possible implementation, the determining module 1301 is specifically configured to:
determine, according to the first bandwidth, a second bandwidth of the initial uplink BWP; and/or
determine, according to the first frequency position, a second frequency position of the initial uplink BWP.

In a possible implementation, the second bandwidth and the first bandwidth are the same; the first frequency position and the second frequency position are the same.

In a possible implementation, the first bandwidth information includes a first frequency start position.

In a possible implementation, the determining module 1301 is specifically configured to: determine, according to the first frequency start position, a second frequency start position of the initial uplink BWP.

In a possible implementation, the first frequency start position and the second frequency start position are the same.

In a possible implementation, the first bandwidth information includes a first frequency end position.

In a possible implementation, the determining module 1301 is specifically configured to:
determine, according to the first frequency end position, a second frequency end position of the initial uplink BWP.

In a possible implementation, the second frequency end position and the first frequency end position are the same.

In a possible implementation, the first bandwidth information includes a first frequency center point.

In a possible implementation, the determining module 1301 is specifically configured to:
determine, according to the first frequency center point, a second frequency center point of the initial uplink BWP.

In a possible implementation, the first frequency center point and the second frequency center point are the same.

In a possible implementation, the apparatus further includes: a receiving module 1302;
the receiving module 1302 is specifically configured to: receive a system broadcast message from a network device, where the system broadcast message is used to indicate a second bandwidth of the initial uplink BWP and a subcarrier spacing of the initial uplink BWP.

In a possible implementation, the first RO is an RO satisfying a first preset condition among a plurality of ROs.

In a possible implementation, the first preset condition includes at least one of the following: the terminal device receives a random access response RAR after sending the physical random access channel PRACH in the first RO, the terminal device receives a message msg4 response after sending the PRACH in the first RO, the terminal device completes a random access procedure after sending the PRACH in the first RO.

In a possible implementation, the receiving module 1302 is further configured to:
receive first configuration information from the network device, wherein the first configuration information is used to indicate bandwidth information corresponding to the plurality of ROs.

In a possible implementation, the initial uplink BWP is used to send uplink data to the network device before the network device configures an uplink BWP for the terminal device.

The communication apparatus provided in the embodiment of the present application can implement the technical solution presented in the above method embodiments, and its implementation principle and beneficial effects are similar, which will not be repeated here.

FIG. 14 is a schematic structural diagram II of a communication apparatus provided by an embodiment of the present application. Referring to FIG. 14, the communication apparatus 140 may include a transceiving module 1401 and a determining module 1402, where
the transceiving module 1401 is configured to receive a physical random access channel PRACH from a terminal device; and
the determining module 1402 is configured to determine, according to a first random access channel occasion RO corresponding to the PRACH, an initial uplink bandwidth part BWP corresponding to the terminal device, where the initial uplink BWP is determined according to first bandwidth information corresponding to the first RO.

In a possible implementation, the first bandwidth information is used to indicate a frequency range corresponding to the first RO.

In a possible implementation, the first bandwidth information includes a first bandwidth and/or a first frequency position.

In a possible implementation, a second bandwidth of the initial uplink BWP is determined according to the first bandwidth; and/or
a second frequency position of the initial uplink BWP is determined according to the first frequency position.

In a possible implementation, the second bandwidth and the first bandwidth are the same; the first frequency position and the second frequency position are the same.

In a possible implementation, the first bandwidth information includes a first frequency start position.

In a possible implementation, a second frequency start position of the initial uplink BWP is determined according to the first frequency start position.

In a possible implementation, the first frequency start position and the second frequency start position are the same.

In a possible implementation, the first bandwidth information includes a first frequency end position.

In a possible implementation, a second frequency end position of the initial uplink BWP is determined according to the first frequency end position.

In a possible implementation, the second frequency end position and the first frequency end position are the same.

In a possible implementation, the first bandwidth information includes a first frequency center point.

In a possible implementation, a second frequency center point of the initial uplink BWP is determined according to the first frequency center point.

In a possible implementation, the first frequency center point and the second frequency center point are the same.

In a possible implementation, the transceiving module 1401 is further configured to:
send, by the network device, a system broadcast message to the terminal device, where the system broadcast message is used to indicate a second bandwidth of the initial uplink BWP and a subcarrier spacing of the initial uplink BWP.

In a possible implementation, the first RO is an RO satisfying a second preset condition in a plurality of ROs.

In a possible implementation, the second preset condition includes at least one of the following: receiving the PRACH from the terminal device in the first RO, receiving a message msg3 response from the terminal device in the first RO, where the msg3 response is a response message corresponding to the PRACH.

In a possible implementation, the transceiving module 1401 is further configured to:
send, by the network device, first configuration information to the terminal device, where the first configuration information is used to indicate bandwidth information corresponding to the plurality of ROs.

In a possible implementation, the initial uplink BWP is used to receive uplink data from the terminal device before the network device configures an uplink BWP for the terminal device.

The communication apparatus provided in the embodiment of the present application can implement the technical solution presented in the above method embodiments, and its implementation principle and beneficial effects are similar, so it will not be repeated here.

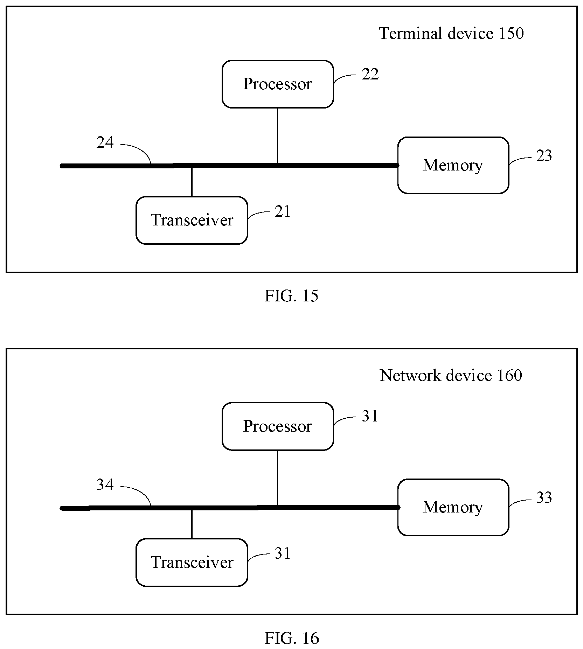

FIG. 15 is a schematic structural diagram of a terminal device provided by an embodiment of the present application. Referring to FIG. 15, a terminal device 20 may include: a transceiver 21, a memory 22 and a processor 23. The transceiver 21 may include: a transmitter and/or a receiver. The transmitter may also be referred to as a transmitting component, a transmitting machine, a transmitting port or a transmitting interface, or other similar descriptions, and the receiver may also be referred to as a receiving component, a receiving machine, a receiving port or a receiving interface. Illustratively, different parts (the transceiver 21, the memory 22 and the processor 23) are mutually connected through a bus 24.

The memory 22 is configured to store a program instruction;
the processor 23 is configured to execute the program instruction stored by the memory, to cause the terminal device 20 to implement the communication method according to any one of the above.

The receiver of the transceiver 21 can be configured to execute the receiving function of the terminal device in the above mentioned communication method.

FIG. 16 is a schematic structural diagram of a network device provided by an embodiment of the present application. Referring to FIG. 16, a network device 20 may include: a transceiver 31, a memory 32 and a processor 33. The transceiver 31 may include: a transmitter and/or a receiver. The transmitter may also be referred to as a transmitting component, a transmitting machine, a transmitting port or a transmitting interface, or other similar descriptions, and the receiver may also be referred to as a receiving component, a receiving machine, a receiving port or a receiving interface. Illustratively, different parts (the transceiver 31, the memory 32 and the processor 33) are mutually connected through a bus 34.

The memory 32 is configured to store a program instruction;
the processor 33 is configured to execute the program instruction stored by the memory, to cause the terminal device 20 to implement the communication method according to any one of the above.

The receiver of the transceiver 31 can be configured to execute the receiving function of the terminal device in the above mentioned communication method.

The embodiment of the present application provides a computer-readable storage medium, where the computer-readable storage medium stores a computer-executable instruction, and the computer-executable instruction is used to, when being executed by the processor, implement the above mentioned communication method.

The embodiment of the present application provides a computer-readable storage medium, where the computer-readable storage medium stores a computer-executable instruction, and the computer-executable instruction is used to, when being executed by the processor, implement the above mentioned communication method.

The embodiment of the present application can also provide a computer program product, where the computer program product can be executed by a processor, and when the computer program product is executed, any one of the above-mentioned communication methods implemented by the terminal device can be implemented.

The communication device, computer-readable storage medium and computer program product of the embodiment of the present application can implement the communication method implemented by the terminal device, and the specific implementation process and beneficial effects thereof are described above, which will not be repeated here.

In several embodiments provided in the present application, it should be understood that the disclosed system, apparatus and method can be implemented in other means. For example, the above-described apparatus embodiment is only schematic, for example, the division of the units is only a division of logical functions, and there may be other ways of division in actual implementations, for example, multiple units or components may be combined or integrated into another system, or some features may be omitted or not executed. On the other hand, the shown or discussed mutual coupling or direct coupling or communication connection may be indirect coupling or communication connection through some interfaces, devices or units, which may be in electrical, mechanical or in other forms.

The units described as separate components may or may not be physically separated, and the components displayed as units may or may not be physical units, that is, they may be located in one place or distributed over multiple network units. Some or all of the units can be selected according to the actual needs to achieve the purpose of the solution of the embodiments.

In addition, each functional unit in each embodiment of the present application may be integrated in one processing unit, or each unit may exist physically alone, or two or more units may be integrated in one unit. The above-mentioned integrated units can be realized in the form of hardware, or in the form of software functional units.

Those of ordinary skill in the art can understand that all or part of the steps to implement the above-mentioned method embodiments can be completed by hardware related to program instructions. The aforementioned computer program can be stored in a computer-readable storage medium. When the computer program is executed by a processor, the steps including the above-mentioned method embodiments are implemented; the above-mentioned storage medium include various medium that can store program codes, such as an ROM, an RAM, a magnetic disk, an optical disk, etc.

Finally, it should be noted that the above embodiments are only used to illustrate the technical solutions of the present application, but not to limit it; although the application has been described in detail with reference to the above mentioned embodiments, those skilled in the art should understand that they can still modify the technical solutions described in the above mentioned embodiments, or equivalently replace some or all of the technical features; these modifications or substitutions do not make the essence of the corresponding technical solutions depart from the scope of the technical solutions of the embodiments of the present application.

## Claims

1. A communication method, wherein the method is applied in a terminal device, and the method comprises:
determining, according to first bandwidth information corresponding to a first random access channel occasion RO, an initial uplink bandwidth part BWP.

2. The method according to claim 1, wherein the first bandwidth information is used to indicate a frequency range corresponding to the first RO.

3. The method according to any one of claims 1-2, wherein the first bandwidth information comprises a first bandwidth and/or a first frequency position.

4. The method according to any one of claims 1-3, wherein the determining, according to the first bandwidth information corresponding to the first random access channel occasion RO, the initial uplink bandwidth part BWP comprises:
determining, according to the first bandwidth, a second bandwidth of the initial uplink BWP; and/or
determining, according to the first frequency position, a second frequency position of the initial uplink BWP.

5. The method according to claim 4, wherein the second bandwidth and the first bandwidth are the same; the first frequency position and the second frequency position are the same.

6. The method according to any one of claims 1-2, wherein the first bandwidth information comprises a first frequency start position.

7. The method according to any one of claims 1-2 and 6, wherein the determining, according to the first bandwidth information corresponding to the first random access channel occasion RO, the initial uplink bandwidth part BWP comprises:
determining, according to the first frequency start position, a second frequency start position of the initial uplink BWP.

8. The method according to claim 7, wherein the first frequency start position and the second frequency start position are the same.

9. The method according to any one of claims 1-2, wherein the first bandwidth information comprises a first frequency end position.

10. The method according to any one of claims 1-2 and 9, wherein the determining, according to the first bandwidth information corresponding to the first random access channel occasion RO, the initial uplink bandwidth part BWP comprises:
determining, according to the first frequency end position, a second frequency end position of the initial uplink BWP.

11. The method according to claim 10, wherein the second frequency end position and the first frequency end position are the same.

12. The method according to any one of claims 1-2, wherein the first bandwidth information comprises a first frequency center point.

13. The method according to any one of claims 1-2 and 12, wherein the determining, according to the first bandwidth information corresponding to the first random access channel occasion RO, the initial uplink bandwidth part BWP comprises:
determining, according to the first frequency center point, a second frequency center point of the initial uplink BWP.

14. The method according to claim 13, wherein the first frequency center point and the second frequency center point are the same.

15. The method according to any one of claims 6-14, wherein the method further comprises:
receiving a system broadcast message from a network device, wherein the system broadcast message is used to indicate a second bandwidth of the initial uplink BWP and a subcarrier spacing of the initial uplink BWP.

16. The method according to any one of claims 1-15, wherein the first RO is an RO satisfying a first preset condition among a plurality of ROs.

17. The method according to claim 16, wherein the first preset condition comprises at least one of the following: the terminal device receives a random access response RAR after sending the physical random access channel PRACH in the first RO, the terminal device receives a message msg4 response after sending the PRACH in the first RO, the terminal device completes a random access procedure after sending the PRACH in the first RO.

18. The method according to any one of claims 1-17, wherein the method further comprises:
receiving first configuration information from the network device, wherein the first configuration information is used to indicate bandwidth information corresponding to the plurality of ROs.

19. The method according to any one of claims 1-18, wherein the initial uplink BWP is used to send uplink data to the network device before the network device configures an uplink BWP for the terminal device.

20. A communication method, wherein the method is applied in a network device, and the method comprises:
receiving a physical random access channel PRACH from a terminal device; and
determining, according to a first random access channel occasion RO corresponding to the PRACH, an initial uplink bandwidth part BWP corresponding to the terminal device, wherein the initial uplink BWP is determined according to first bandwidth information corresponding to the first RO.

21. The method according to claim 20, wherein the first bandwidth information is used to indicate a frequency range corresponding to the first RO.

22. The method according to any one of claims 20-21, wherein the first bandwidth information comprises a first bandwidth and/or a first frequency position.

23. The method according to any one of claims 20-22, wherein a second bandwidth of the initial uplink BWP is determined according to the first bandwidth; and/or
a second frequency position of the initial uplink BWP is determined according to the first frequency position.

24. The method according to claim 23, wherein the second bandwidth and the first bandwidth are the same; the first frequency position and the second frequency position are the same.

25. The method according to any one of claims 20-21, wherein the first bandwidth information comprises a first frequency start position.

26. The method according to any one of claims 20-21 and 25, wherein a second frequency start position of the initial uplink BWP is determined according to the first frequency start position.

27. The method according to claim 26, wherein the first frequency start position and the second frequency start position are the same.

28. The method according to any one of claims 20-21, wherein the first bandwidth information comprises a first frequency end position.

29. The method according to any one of claims 20-21 and 28, wherein a second frequency end position of the initial uplink BWP is determined according to the first frequency end position.

30. The method according to claim 29, wherein the second frequency end position and the first frequency end position are the same.

31. The method according to any one of claims 20-21, wherein the first bandwidth information comprises a first frequency center point.

32. The method according to any one of claims 20-21 and 31, wherein a second frequency center point of the initial uplink BWP is determined according to the first frequency center point.

33. The method according to claim 32, wherein the first frequency center point and the second frequency center point are the same.

34. The method according to any one of claims 25-33, wherein the method further comprises:
sending, by the network device, a system broadcast message to the terminal device, wherein the system broadcast message is used to indicate a second bandwidth of the initial uplink BWP and a subcarrier spacing of the initial uplink BWP.

35. The method according to any one of claims 20-34, wherein the first RO is an RO satisfying a second preset condition among a plurality of ROs.

36. The method according to claim 35, wherein the second preset condition comprises at least one of the following: receiving the PRACH from the terminal device in the first RO, receiving a message msg3 response from the terminal device in the first RO, wherein the msg3 response is a response message corresponding to the PRACH.

37. The method according to any one of claims 20-36, wherein the method further comprises:
sending, by the network device, first configuration information to the terminal device, wherein the first configuration information is used to indicate bandwidth information corresponding to the plurality of ROs.

38. The method according to any one of claims 20-37, wherein the initial uplink BWP is used to receive uplink data sent by the terminal device before the network device configures an uplink BWP for the terminal device.

39. A communication apparatus, wherein the apparatus is applied in a terminal device, and the apparatus comprises:
a determining module, configured to determine, according to first bandwidth information corresponding to a first random access channel occasion RO, an initial uplink bandwidth part BWP.

40. The apparatus according to claim 39, wherein the first bandwidth information is used to indicate a frequency range corresponding to the first RO.

41. The apparatus according to any one of claims 39-40, wherein the first bandwidth information comprises a first bandwidth and/or a first frequency position.

42. The apparatus according to any one of claims 39-41, wherein the determining module is specifically configured to:
determine, according to the first bandwidth, a second bandwidth of the initial uplink BWP; and/or
determine, according to the first frequency position, a second frequency position of the initial uplink BWP.

43. The apparatus according to claim 42, wherein the second bandwidth and the first bandwidth are the same; the first frequency position and the second frequency position are the same.

44. The apparatus according to any one of claims 39-40, wherein the first bandwidth information comprises a first frequency start position.

45. The apparatus according to any one of claims 39-40 and 44, wherein the determining module is specifically configured to: determine, according to the first frequency start position, a second frequency start position of the initial uplink BWP.

46. The apparatus according to claim 45, wherein the first frequency start position and the second frequency start position are the same.

47. The apparatus according to any one of claims 39-40, wherein the first bandwidth information comprises a first frequency end position.

48. The apparatus according to any one of claims 39-40 and 47, wherein the determining module is specifically configured to:
determine, according to the first frequency end position, a second frequency end position of the initial uplink BWP.

49. The apparatus according to claim 48, wherein the second frequency end position and the first frequency end position are the same.

50. The apparatus according to any one of claims 39-40, wherein the first bandwidth information comprises a first frequency center point.

51. The apparatus according to any one of claims 39-40 and 50, wherein the determining module is specifically configured to:
determine, according to the first frequency center point, a second frequency center point of the initial uplink BWP.

52. The apparatus according to claim 51, wherein the first frequency center point and the second frequency center point are the same.

53. The apparatus according to any one of claims 44-52, wherein the apparatus further comprises: a receiving module;
the receiving module is specifically configured to: receive a system broadcast message from a network device, wherein the system broadcast message is used to indicate a second bandwidth of the initial uplink BWP and a subcarrier spacing of the initial uplink BWP.

54. The apparatus according to any one of claims 39-53, wherein the first RO is an RO satisfying a first preset condition among a plurality of ROs.

55. The apparatus according to claim 54, wherein the first preset condition comprises at least one of the following: the terminal device receives a random access response RAR after sending the physical random access channel PRACH in the first RO, the terminal device receives a message msg4 response after sending the PRACH in the first RO, the terminal device completes a random access procedure after sending the PRACH in the first RO.

56. The apparatus according to any one of claims 39-55, wherein the receiving module is further configured to:
receive first configuration information from the network device, wherein the first configuration information is used to indicate bandwidth information corresponding to the plurality of ROs.

57. The apparatus according to any one of claims 39-56, wherein the initial uplink BWP is used to send uplink data to the network device before the network device configures an uplink BWP for the terminal device.

58. A communication apparatus, wherein the apparatus is applied to a network device, and the apparatus comprises:
a transceiving module, configured to receive a physical random access channel PRACH from a terminal device; and
a determining module, configured to determine, according to a first random access channel occasion RO corresponding to the PRACH, an initial uplink bandwidth part BWP corresponding to the terminal device, wherein the initial uplink BWP is determined according to first bandwidth information corresponding to the first RO.

59. The apparatus according to claim 58, wherein the first bandwidth information is used to indicate a frequency range corresponding to the first RO.

60. The apparatus according to any one of claims 58-59, wherein the first bandwidth information comprises a first bandwidth and/or a first frequency position.

61. The apparatus according to any one of claims 58-60, wherein a second bandwidth of the initial uplink BWP is determined according to the first bandwidth; and/or
a second frequency position of the initial uplink BWP is determined according to the first frequency position.

62. The apparatus according to claim 61, wherein the second bandwidth and the first bandwidth are the same; the first frequency position and the second frequency position are the same.

63. The apparatus according to any one of claims 58-59, wherein the first bandwidth information comprises a first frequency start position.

64. The apparatus according to any one of claims 58-59 and 63, wherein a second frequency start position of the initial uplink BWP is determined according to the first frequency start position.

65. The apparatus according to claim 64, wherein the first frequency start position and the second frequency start position are the same.

66. The apparatus according to any one of claims 58-59, wherein the first bandwidth information comprises a first frequency end position.

67. The apparatus according to any one of claims 58-59 and 66, wherein a second frequency end position of the initial uplink BWP is determined according to the first frequency end position.

68. The apparatus according to claim 67, wherein the second frequency end position and the first frequency end position are the same.

69. The apparatus according to any one of claims 58-59, wherein the first bandwidth information comprises a first frequency center point.

70. The apparatus according to any one of claims 58-59 and 69, wherein a second frequency center point of the initial uplink BWP is determined according to the first frequency center point.

71. The apparatus according to claim 70, wherein the first frequency center point and the second frequency center point are the same.

72. The apparatus according to any one of claims 63-71, wherein the transceiving module is further configured to:
send, by the network device, a system broadcast message to the terminal device, wherein the system broadcast message is used to indicate a second bandwidth of the initial uplink BWP and a subcarrier spacing of the initial uplink BWP.

73. The apparatus according to any one of claims 58-72, wherein the first RO is an RO satisfying a second preset condition in a plurality of ROs.

74. The apparatus according to claim 73, wherein the second preset condition comprises at least one of the following: receiving the PRACH from the terminal device in the first RO, receiving a message msg3 response from the terminal device in the first RO, wherein the msg3 response is a response message corresponding to the PRACH.

75. The apparatus according to any one of claims 58-74, wherein the transceiving module is further configured to:
send, by the network device, first configuration information to the terminal device, wherein the first configuration information is used to indicate bandwidth information corresponding to the plurality of ROs.

76. The apparatus according to any one of claims 58-75, wherein the initial uplink BWP is used to receive uplink data sent by the terminal device before the network device configures an uplink BWP for the terminal device.

77. A terminal device, wherein the terminal device comprises: a transceiver, a processor and a memory;
the memory stores a computer-executable instruction;
the processor executes the computer-executable instruction stored in the memory to cause the processor to execute the communication method according to any one of claims 1-19.

78. A network device, wherein the network device comprises: a transceiver, a processor and a memory;
the memory stores a computer-executable instruction;
the processor executes the computer-executable instruction stored in the memory to cause the processor to execute the communication method according to any one of claims 20-38.

79. A computer-readable storage medium, wherein the computer-readable storage medium stores a computer-executable instruction, and the computer-executable instruction is used to, when being executed by the processor, implement the communication method according to any one of claims 1-19.

80. A computer-readable storage medium, wherein the computer-readable storage medium stores a computer-executable instruction, and the computer-executable instruction is used to, when being executed by the processor, implement the communication method according to any one of claims 20-38.
